(19) Europäisches Patentamt
European Patent Office
Office européen des brevets

(11) Veröffentlichungsnummer: **0 431 422 A1**

# (12) EUROPÄISCHE PATENTANMELDUNG

(21) Anmeldenummer: **90122432.9**

(51) Int. Cl.[5]: **C09B 11/16**

(22) Anmeldetag: **24.11.90**

(30) Priorität: **07.12.89 DE 3940478**

(43) Veröffentlichungstag der Anmeldung:
**12.06.91 Patentblatt 91/24**

(84) Benannte Vertragsstaaten:
**CH DE FR GB LI**

(71) Anmelder: **BAYER AG**
**W-5090 Leverkusen 1 Bayerwerk(DE)**

(72) Erfinder: **Eckstein, Udo, Dr.**
**Wolfskaul 8**
**W-5000 Köln 80(DE)**

(54) **Bis-Triarylmethan-Verbindungen.**

(57) Verbindungen der allgemeinen Formel

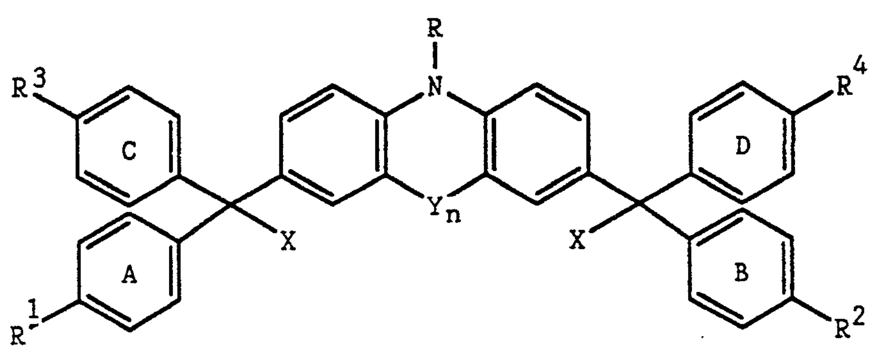

I,

worin die Symbole die in der Beschreibung genannte Bedeutung haben, eignen sich hervorragend als Farbbildner in Aufzeichnungsmaterialien auf der Basis saurer Entwickler. Man erhält intensive blaue, grünblaue, grüne, violette oder rote Farbtöne, die ausgezeichnet sublimations-und lichtecht sind.

EP 0 431 422 A1

## BIS-TRIARYLMETHAN-VERBINDUNGEN

Gegenstand der Erfindung sind Verbindungen der allgemeinen Formel

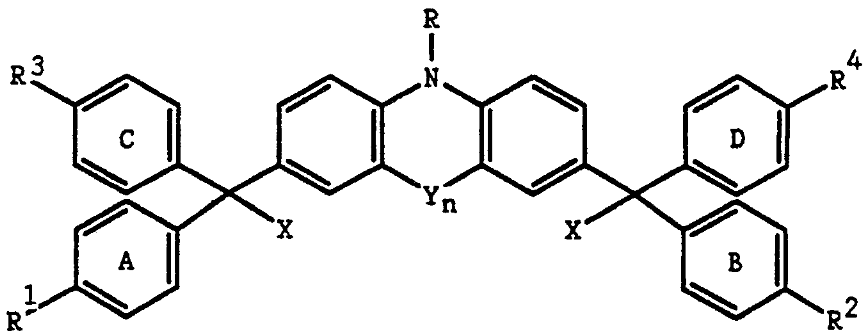

I,

worin - unabhängig voneinander -

X

Hydroxy, Alkoxy, Alkenyloxy, Aralkoxy, Cycloalkoxy, Aryloxy, Acyloxy, Alkylamino, Dialkylamino, Acylamino, Aralkylamino oder Arylamino,

Y

eine direkte Bindung, Sauerstoff, Schwefel oder N-R ,

R

Alkyl, Alkenyl oder Aralkyl,

$R^1$ und $R^2$

Alkoxy, Aralkoxy, Aryloxy oder einen Rest der Formel

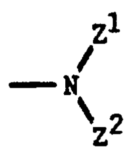

$R^3$ und $R^4$

Wasserstoff, Halogen, Alkyl, Alkoxy, Aralkyl, Aralkoxy, Aryloxy oder einen Rest der Formel

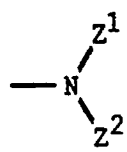

$Z^1$ und $Z^2$

Alkyl, Aryl, cycloalkyl oder Aralkyl und

n

0 oder 1 bedeuten, wobei

den Ringen A, B, C und D weitere isocyclische oder heterocyclische Ringe anelliert werden können, und die cyclischen und acyclischen Reste sowie die Ringe A, B, C und D weitere in der Farbstoffchemie übliche, nichtionische Substituenten tragen können, sowie ihre Herstellung und ihre Verwendung als Farbbildner in druckempfindlichen und thermoreaktiven Aufzeichnungsmaterialien.

In der Farbstoffchemie übliche, nichtionische Substituenten sind z.B. Halogen, Hydroxy, Alkoxy, Alkenyloxy, Aryloxy, Aralkoxy, Cycloalkyloxy, Alkylcarbonyloxy, Arylcarbonyloxy, Aryl, Alkylmercapto, Arylmercapto, Aralkylmercapto, Alkylsulfonyl, Cyan, Carbamoyl, Alkoxycarbonyl, Amino, das durch 1 oder 2 Alkyl-, Cycloalkyl-, Aryl- oder Aralkyl-gruppen substituiert sein kann, oder dessen Substituenten ringgeschlossen sein können, bevorzugt zu einem 5- oder 6-gliedrigen Ring, Acylamino, und als Substituenten der Ringe außerdem Alkyl, Aryl, Aralkyl, Alkenyl oder Arylvinyl.

Alkyl steht für $C_1$-$C_{30}$-Alkyl, insbesondere für $C_1$-$C_{12}$-Alkyl.

Die Alkylreste und die Alkylreste in Alkoxy-, Alkyl-thio-, Alkylamino-, Alkanoylamino-, Alkylsulfonyl- und Alkoxycarbonyl-gruppen können verzweigt und beispielsweise durch Fluor, Chlor, $C_1$-$C_4$-Alkoxy, Cyano oder $C_1$-$C_4$-Alkoxycarbonyl substituiert sein.

Aralkyl ist insbesondere Phenyl-$C_1$-$C_4$-alkyl, das im Phenylkern durch Halogen, $C_1$-$C_4$-Alkyl und/oder $C_1$-$C_4$-Alkoxy substituiert sein kann.

Cycloalkyl ist insbesondere gegebenfalls durch Methyl substituiertes Cyclopentyl oder Cyclohexyl.

Alkenyl ist insbesondere $C_2$-$C_5$-Alkenyl, das durch Hydroxy. $C_1$-$C_4$-Alkoxycarbonyl, Chlor oder Brom monosubstituiert sein kann. Bevorzugt sind Vinyl und Allyl.

Halogen ist insbesondere Fluor, Chlor und Brom, vorzugsweise Chlor.

Aryl ist insbesondere gegebenenfalls durch ein bis drei $C_1$-$C_4$-Alkyl, Chlor, Brom, Cyan, $C_1$-$C_4$-Alkoxycarbonyl oder $C_1$-$C_4$-Alkoxy substituiertes Phenyl oder Naphtyl.

Alkoxy ist insbesondere gegebenenfalls durch Chlor oder $C_1$-$C_4$-Alkoxy substituiertes $C_1$-$C_{12}$-Alkoxy.

Acyl ist insbesondere $C_1$-$C_4$-Alkylcarbonyl und $C_1$-$C_4$-Alkoxycarbonyl, gegebenenfalls durch $C_1$-$C_4$-Alkyl, Phenyl, oder Benzyl mono- oder disubstituiertes Aminocarbonyl oder Aminosulfonyl.

Alkoxycarbonyl ist insbesondere gegebenenfalls durch Hydroxy, Halogen oder Cyan substituiertes $C_1$-$C_4$-Alkoxycarbonyl.

Die Ringe können durch nichtionische Substituenten, insbesondere durch $C_1$-$C_4$-Alkyl, $C_1$-$C_4$-Alkoxy, Cyan, Nitro oder Halogen substituiert sein.

Von den Verbindungen der Formel I haben die Verbindungen der Formel

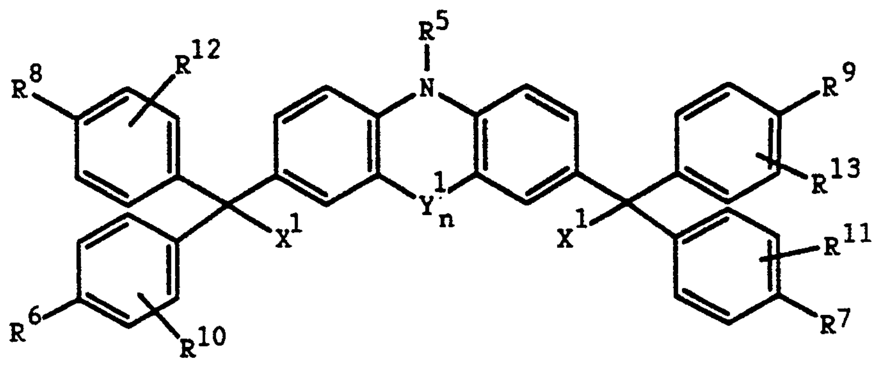

II,

besondere Bedeutung, worin - unabhängig voneinander -

$X^1$

Hydroxy, gegebenenfalls durch $C_1$-$C_4$-Alkoxy oder Chlor substituiertes $C_1$-$C_{12}$-Alkoxy oder Benzyloxy,

$Y^1$

eine direkte Bindung, Sauerstoff oder N-$R^5$,

$R^5$

$C_1$-$C_{12}$-Alkyl oder Benzyl,

$R^6$ und $R^7$

gegebenenfalls durch Chlor, $C_1$-$C_4$-Alkoxy substituiertes $C_1$-$C_{12}$-Alkoxy, Benzyloxy, Phenoxy oder einen Rest der Formel

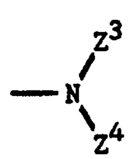

$R^8$ und $R^9$

Wasserstoff, Chlor, gegebenenfalls durch Chlor oder $C_1$-$C_4$-Alkoxy substituiertes $C_1$-$C_{12}$-Alkyl, gegebenenfalls durch Chlor oder $C_1$-$C_4$-Alkoxy substituiertes $C_1$-$C_{12}$-Alkoxy, Benzyl, Phenoxy oder einen Rest der

Formel

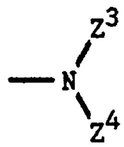

$R^{10}$, $R^{11}$, $R^{12}$ und $R^{13}$
Wasserstoff, Chlor, $C_1$-$C_{12}$-Alkyl, $C_1$-$C_{12}$-Alkoxy, Phenoxy, Benzyloxy oder einen Rest der Formel

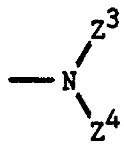

n
0 oder 1,
$Z^3$ und $Z^4$
gegebenenfalls durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_{12}$-Alkyl oder $C_1$-$C_{12}$-Alkoxy substituiert sein können, oder
$R^6$ mit $R^{10}$, $R^7$ mit $R^{11}$, $R^8$ mit $R^{12}$, $R^9$ mit $R^{13}$
unter Einschluß des sie tragenden Benzolringes ein Ringsystem der Formeln

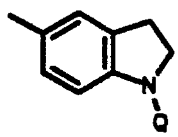 , 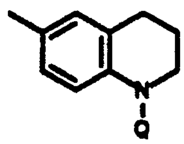 , 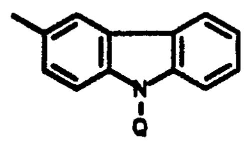

oder 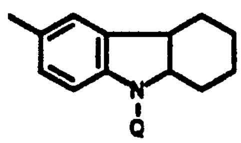 bilden können, wobei

Q
für $C_1$-$C_{12}$-Alkyl, das durch Chlor, Cyano, $C_1$-$C_4$-Alkoxycarbonyl oder $C_1$-$C_4$-Alkoxy substituiert sein kann, Cyclohexyl, Phenyl oder Benzyl, die durch Chlor, $C_1$-$C_{12}$-Alkyl oder $C_1$-$C_{12}$-Alkoxy substituiert sein können, steht, und der gesättigte Ringteil bis zu vier Reste aus der Gruppe Chlor, $C_1$-$C_4$-Alkyl, $C_1$-$C_4$-Alkoxy oder Phenyl tragen kann, oder

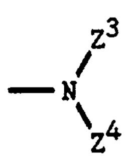

einen gegebenenfalls durch Chlor, $C_1$-$C_4$-Alkyl oder Phenyl substituierten Pyrrolo-, Pyrrolidino-, Piperidino-, Pipecolino-, Morpholino-, Pyrazolo- oder Pyrazolinrest bedeutet.

Beispiele für im gesättigten Ring substituierte Reste sind:

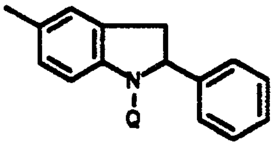 , 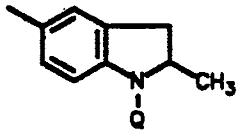 , 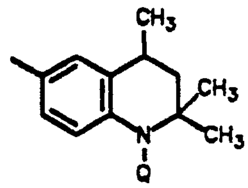 ,

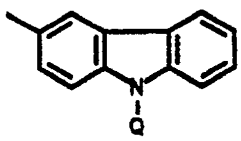 und 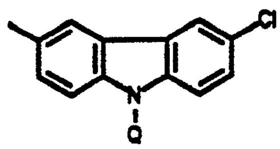

Besonders bevorzugt sind die Verbindungen der Formel

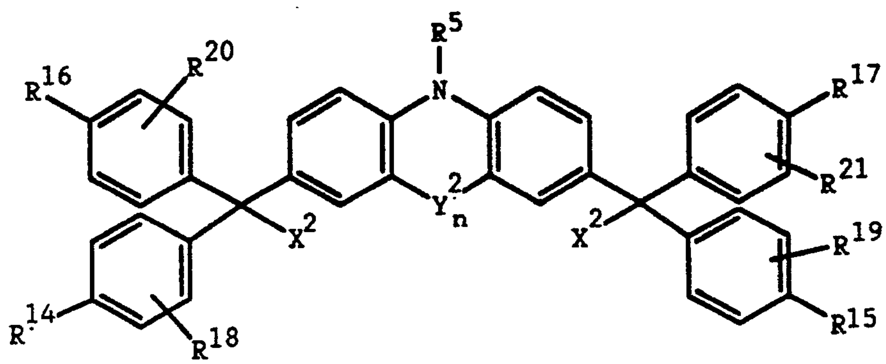 III,

worin - unabhängig voneinander -

$X^2$

Hydroxy oder $C_1$-$C_{12}$-Alkoxy,

$Y^2$

eine direkte Bindung,

$R^{14}$ und $R^{15}$

$C_1$-$C_{12}$-Alkoxy, Benzyloxy oder einen Rest der Formel

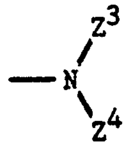

$R^{16}$ und $R^{17}$

Wasserstoff, Chlor, $C_1$-$C_{12}$-Alkyl, $C_1$-$C_{12}$-Alkoxy. Benzyloxy oder einen Rest der Formel

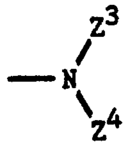

$R^{18}$, $R^{19}$, $R^{20}$ und $R^{21}$

Wasserstoff, Chlor, $C_1$-$C_{12}$-Alkyl, $C_1$-$C_{12}$-Alkoxy, $C_1$-$C_4$-Alkylamino oder Di-$C_1$-$C_4$ Alkylamino oder $R^{14}$ und $R^{15}$

gemeinsam mit dem Benzolring, an dem sie gebunden sind, ein Ringsystems der Formeln

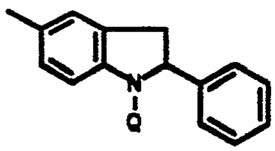,
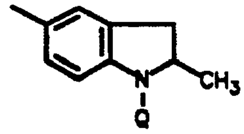,

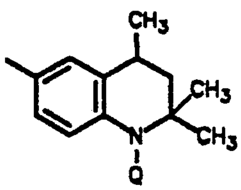 oder 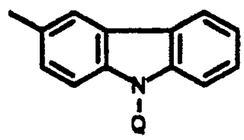 bilden

können, wobei

$R^5$, Q, $Z^3$, $Z^4$ und n

die vorgenannte Bedeutung haben.

Ganz besonders bevorzugt sind die symmetrischen Verbindungen der Formel III.

Die Verbindungen der Formel I können nach an sich bekannten Verfahren hergestellt werden. Ein Verfahren besteht z.B. darin, daß man Farbstoffsalze der Formel

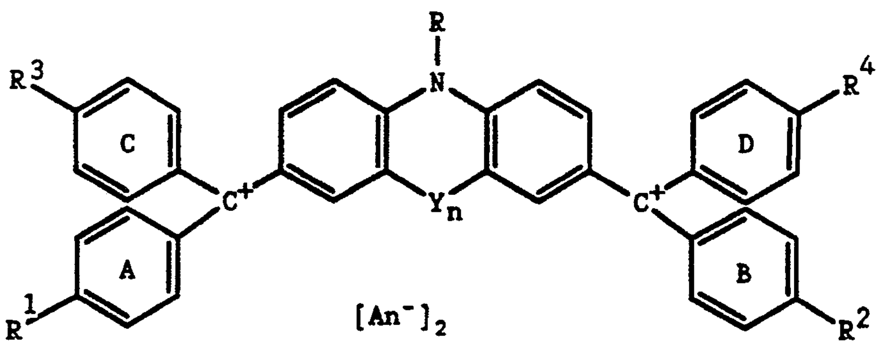

IV

mit den Basen der Formel MeX (V),

worin

R, $R^1$-$R^4$, X, Y, n und die Ringe A, B, C, und D die oben genannte Bedeutung haben, und

Me

ein Alkali- oder Erdalkalimetall, insbesondere Natrium oder Kalium und

$An^-$

ein Anion aus der Reihe Chlorid, Bromid, Acetat, Sulfat, Phosphat oder p-Toluolsulfonat bedeuten,

in einem für die Reaktion geeigneten, organischen Lösungsmittel umsetzt.

Anschließend wird eventuell nach Entfernen des Lösungsmittels auf Wasser ausgetragen und die Verbindungen der Formel I isoliert.

Geeignete Reaktionsmedien sind polare Lösungsmittel wie Dimethylformamid, Dimethylsulfoxid, Hexamethylphosphorsäuretriamid und Alkanole. Bevorzugt sind Dimethylformamid und $C_1$-$C_{18}$-Alkanole.

Geeignete Reaktionstemperaturen liegen zwischen 20 und 120° C, bevorzugt sind 30 bis 80° C.

Ein besonders vorteilhaftes Herstellungsverfahren besteht darin, daß man in einer Eintopfreaktion insgesamt 2 mol der Ketone der Formeln

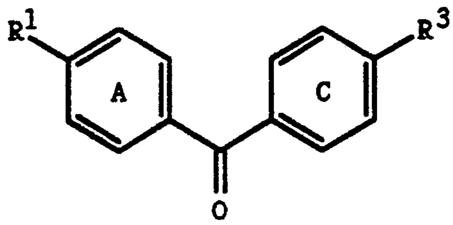

VI

und

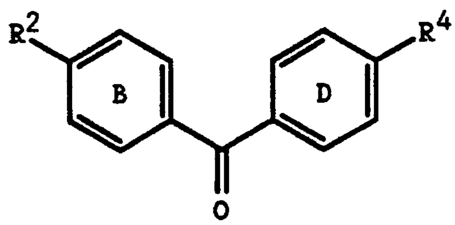

VII

entweder gleichzeitig oder nacheinander mit 1 mol Amin der Formel

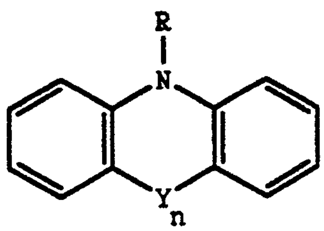

VIII

oder 1 mol Diketon der Formel

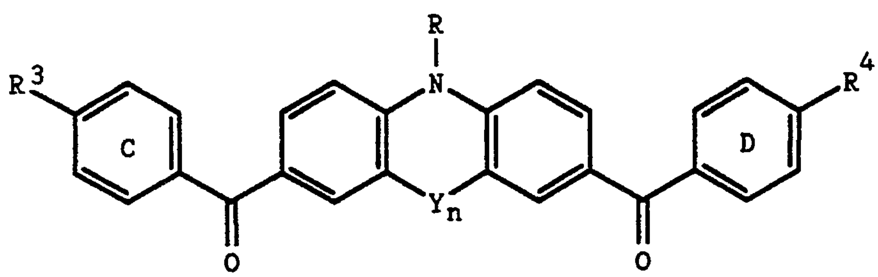

IX

mit insgesamt 2 mol Amin der Formeln

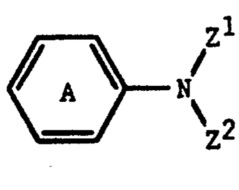

X

und

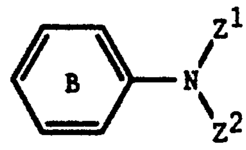

XI

in Gegenwart eines Kondensationsmittels, das ein Anion $An^-$ liefert, zu den Farbsalzen der Formel IV kondensiert und diese ohne Zwischenisolierung mit den Basen V, wie vorstehend beschrieben, umsetzt.

Als Kondensationsmittel werden dabei vorzugsweise Phosphoroxychlorid und/oder Diphosphorpentoxid eingesetzt.

Die erhaltenen Verbindungen der Formel I können ohne weitere Reinigung beispielsweise als Farbbildner in den Handel gebracht und in druckempfindlichen Aufzeichnungsmaterialien, insbesondere in mikroverkapselten Materialien eingesetzt werden.

Die erfindungsgemäßen Verbindungen der Formel I sind normalerweise farblos oder höchstens schwach gefärbt und zeigen eine sehr hohe Löslichkeit in den für die Verkapselung üblichen Lösungsmitteln, wie z.B. (Chlor-) Kohlenwasserstoffen, Phthalsäureestern oder auch in pflanzlichen Ölen.

Sie ergeben bei Kontakt mit einem sauren Entwickler, d.h. einem Elektronenakzeptor, intensive blaue, grünblaue, grüne, violette oder rote Farbtöne, die ausgezeichnet sublimations- und lichtecht sind. Durch Mischungen untereinander lassen sich marineblaue, graue oder schwarze Färbungen erzielen.

Sie sind auch wertvoll im Gemisch mit einem oder mehreren anderen bekannten Farbbildnern, z.B. 3,3-Bis-(amino-phenyl)-phthaliden, 3,3-Bis-(indolyl)-phthaliden, 3-Amino-fluoranen, 2,6-Diamino-fluoranen, Leukoauraminen, Spiropyranen, Spirodipyranen, Chromeno-indolen, Phenoxazinen, Phenothiazinen, Carbazolylmethanen oder anderen Triarylmethanleukofarbstoffen, um grüne, violette, blaue, marineblaue, graue oder schwarze Färbungen zu ergeben.

Sie zeigen sowohl auf phenolischen Unterlagen als auch auf Salicylat und aktivierten Tonen eine hohe Farbintensität, eine herausragende Lichtechtheit und ausgezeichnete Alterungs- und CB-Stabilität. Sie eignen sich für druckempfindliches Aufzeichnungsmaterial, das sowohl Kopier-als auch Registriermaterial sein kann. Ihre Entwicklungsgeschwindigkeit ist in Abhängigkeit von den Substituenten unterschiedlich. Im allgemeinen zeichnen sie sich jedoch durch eine hohe Entwicklungsgeschwindigkeit aus, bei gleichzeitig reduzierter Empfindlichkeit der Aufzeichnungsmaterialien gegenüber unbeabsichtigter vorzeitiger Entwicklung.

Die Farbbildner der Formel I zeigen außerdem ein besonders vorteilhaftes Migrationsverhalten, hinsichtlich minimalster Diffusion durch das Kapselmaterial der Mikrokapseln.

Durch Substitution mit langkettigen Alkylresten wird die Löslichkeit der Farbbildner so weit erhöht, daß sich auch von den weniger löslichen Verbindungen hochkonzentrierte Lösungen in den zur Mikroverkapselung geeigneten Lösungsmitteln herstellen lassen.

Druckempfindliche Aufzeichnungsmaterialien sind beispielsweise aus den US-Patentschriften 2 800 457 und 2 800 458 bekannt.

Beispiel 1

Zu einer Lösung von 32,2 g (0,13 mol) 4,4'-Dimethoxybenzophenon, 97,8 %ig, in 143,5 g (0,94 mol) Phosphoroxychlorid werden portionsweise 26,8 g(0,19 mol) Phosphorpentoxid, 98,5 %ig, hinzugefügt. Zu dieser Mischung werden bei Raumtemperatur innerhalb von 30 min schließlich 12 g (0,065 mol) N-Methyldiphenylamin, 99 %ig, zugetropft. Es wird auf 90 °C erwärmt und 18 h bei dieser Temperatur verrührt. Unter gutem Rühren wird die auf 20-25 °C abgekühlte Schmelze langsam auf 500 ml Wasser und 150 ml Toluol ausgetragen, so daß die Temperatur 60 °C nicht übersteigt. Mit 600 g (7,5 mol) 50%iger Natronlauge wird durch langsames Hinzufügen ein pH-Wert zwischen 8,5 und 9 eingestellt. Die Mischung wird 6 h bei 60 °C verrührt. Danach wird die sich oben absetzende organische Phase abgetrennt. Aus der abgetrennten organischen Phase werden im Wasserstrahlvakuum bei 18 bis 20 mbar und bis zu einer Temperatur von 60 °C azeotrop Toluol und Restwasser entfernt. Auf diese Weise erhält man 40,8 g eines blaßrosa-farbenen Harzes, das langsam durchkristallisiert, vom Schmp: 68-75 °C und der Formel:

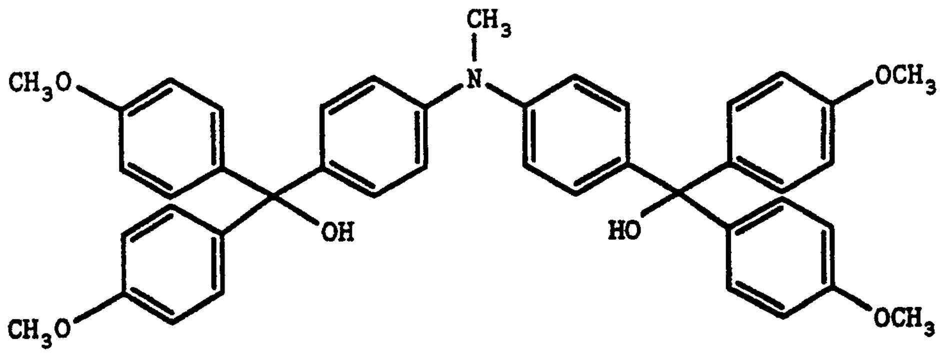

1

Der Farbbildner kann aus Di-sec.-butylether umkristallisiert werden; Schmp.: 78-80 °C.

In Eisessig gelöst, zeigt er eine stark rotviolette Farbe mit $\lambda_{max}$ = 556 nm und $\lambda_2$ = 430 nm. Der Farbbildner löst sich leicht bis zu 30 % in Di-isopropyl-naphthalin, Chlorparaffin ($C_{12}$-$C_{18}$-n-Paraffin, ≈45 % Chlor), Sesamöl oder Leinöl und kann auf Einsatzkonzentrationen in Aufzeichnungsmaterialien von 3 %, 5 % oder 7 % verdünnt werden.

Auf Säureton und Bisphenol A erhält man kräftige rotviolette Farbtöne mit hohen Lichtechtheiten.

Der Farbbildner zeigt außerdem, eingearbeitet in Mikrokapseln, deren Hüllen aus Polyadditionsprodukten von Polyisocynaten und Polyaminen bestehen, bei höheren Temperaturen keine merkliche Migration, was besonders vorteilhaft ist.

Beispiel 2

Verfährt man wie im obigen Beispiel beschrieben, verwendet statt 32,2 g (0,13 mol) lediglich 24 g (0,0975 mol) 4,4'-Dimethoxy-benzophenon, so erhält man 39,2 g blaßrosa Harz, das laut HPLC aus einem Gemisch von ca. 50 % Bis-Triarylmethan-Farbbildner der Formel 1 und ca. 50 % des Mono-Triarylmethan-Farbbildner der Formel

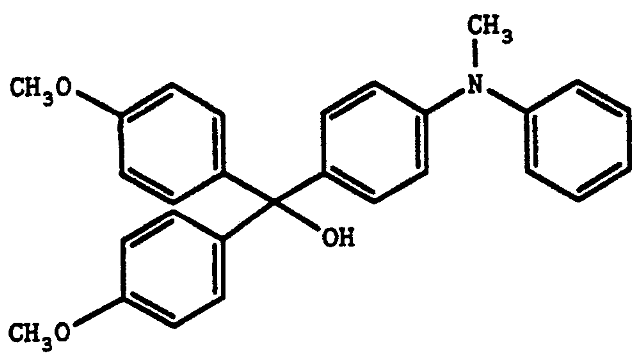

2

besteht und das auf Säureton und Phenolharz ebenfalls einen kräftigen rotvioletten Farbton sowie sehr gutes Migrationsverhalten zeigt.

Beispiel 3

25,5 g (0,1 mol) 4-Methoxy-4'-dimethylamino-benzophenon und 9,2 g (0,05 mol) N-Methyl-diphenylamin werden in 110,6 g (0,72 mol) Phosphoroxychlorid suspendiert und bei Raumtemperatur mit 19,9 g (0,14 mol) Phosphorpentoxid versetzt. Die Schmelze wird 12 h bei 70 °C verrührt und auf 800 ml Eiswasser ausgetragen. Mit ca. 100 ml 30%iger Natronlauge wird der pH-Wert auf 2 gestellt und 200 ml 2%ige Natriumchlorid-Lösung hinzugefügt. Es wird bei Raumtemperatur weitergerührt, bis der Farbstoff sich kristallin abscheidet. Absaugen, Waschen mit Wasser und Trocknen im Vakuum bei 40 °C liefert 31 g (85 % der Theorie) schwärzliche Kristalle vom Schmp.: 124-28 °C.

Zur Suspension von 29,3 g (0,04 mol) dieses Farbstoffes in 150 ml Toluol und 200 ml Wasser werden bei 50 °C langsam 25 g (0,19 mol) 30%ige Natronlauge zugetropft. Die Mischung wird 20 h bei dieser

Temperatur verrührt, bis die organische Phase entfärbt ist. Die organische Phase wird abgetrennt und das Lösunsgmittel sowie etwas Restwasser azetrop im Wasserstrahlvakuum entfernt. Der Rückstand wird im Vakuum bei 30 °C getrocknet. Man erhält 25,5 g (91,9 % der Theorie) graues Pulver vom Schmp. 65-67 °C und der Formel

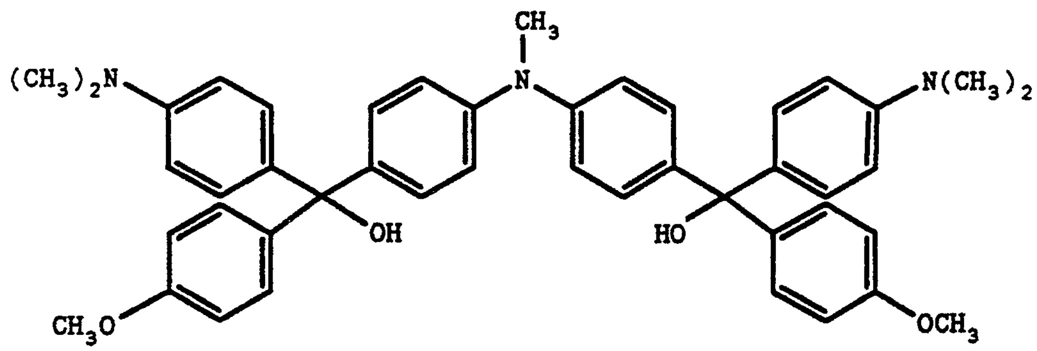

3

In Eisessig gelöst, zeigt es eine blaugrüne Farbe mit $\lambda_{max}$ = 612 nm und $\lambda_2$ = 472 nm. Auf Säureton erhält man eine farbstarke dunkelgrüne Färbung mit ausgezeichneter Lichtechtheit und Alterungsstabilität.

Beispiel 4

Zur Suspension von 11,3 g (0,05 mol) 4-Dimethylamino-benzophenon und 10,7 g (0,075 mol) Phosphorpentoxid in 38,5 g (0,25 mol) Phosphoroxychlorid werden bei Raumtemperatur langsam 4,6 g (0.025 mol) N-Methyl-diphenylamin zugetropft. Es wird auf 90 °C erwärmt und 17 h bei dieser Temperatur verrührt. Die Schmelze wird auf Raumtemperatur abgekühlt und dann auf 600 ml Eiswasser ausgetragen. Man rührt 12 h und saugt die glänzenden Kristalle ab. Trocknen im Vakuum bei 30 °C liefert 25,7 g (76,6 % der Theorie) vom Schmp.: 126-30 °C.

25,4 g (0,04 mol) dieses Farbstoffes werden in 100 ml Dimethylformamid gelöst. Zur Lösung werden bei Raumtemperatur langsam 16 g (0,12 mol) 30%ige Natronlauge getropft. Es wird bei 60 °C 5 h nachgerührt, abfiltriert und das Filtrat auf 250 ml Eiswasser ausgetragen. Nach Zugabe von 25 g Natriumchlorid wird der ausgefallene Niederschlag abgesaugt, mit Wasser gewaschen und getrocknet.Ausbeute: 18,5 g ( 79,2 % d.Theorie) hellgraues Kristallpulver vom Schmp. 52-56 °C und der Formel:

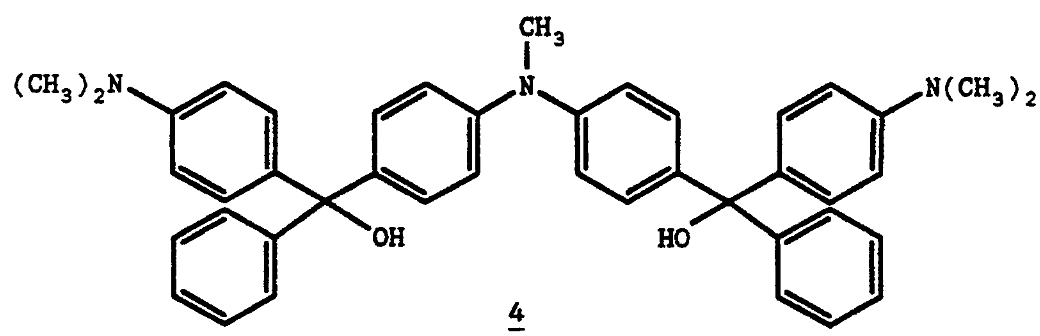

4

In Eisessig gelöst, zeigt es eine grüne Farbe mit $\lambda_{max}$ = 622 nm und $\lambda_2$ = 427 nm.

Auf Säureton, Salicylat und Phenolharz erhält man kräftige malachitgrüne Farbtöne mit sehr guten CF- und CB-Echtheiten.

Analog Beispiel 1- 4 werden auch die folgenden in der Tabelle aufgeführten Farbbildner hergestellt:

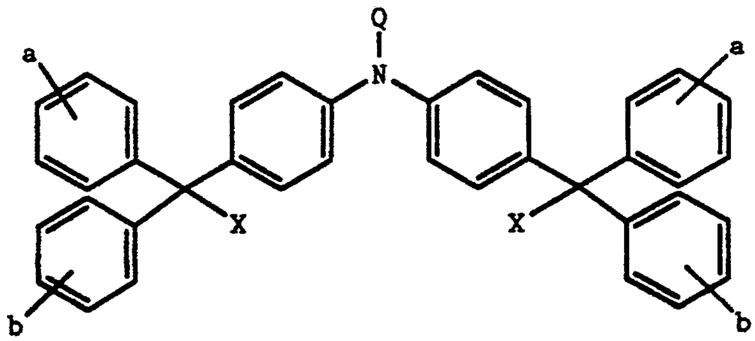

| Beisp. | a | b | Q | X | Farbton auf Säureton |
|---|---|---|---|---|---|
| 5 | 4-$OCH_3$<br>3-$OCH_3$ | 4-$OCH_3$ | $CH_3$ | $OCH_3$ | violett |
| 6 | 4-$OCH_3$<br>3-$OCH_3$ | 3-$OCH_3$ | $CH_3$ | $OC_3H_7$ | violett |
| 7 | 4-$OCH_3$<br>2-$OCH_3$ | 4-$CH_3$ | $C_4H_9$-n | OH/$OCH_3$ | rotviolett |
| 8 | 4-$OCH_3$<br>3-$OCH_3$ | 4-Cl | $CH_2$-$C_6H_5$ | $OC_4H_9$ | orangerot |
| 9 | 4-$OC_2H_5$ | 2-$OCH_3$<br>4-$CH_3$<br>5-Cl | $C_2H_5$ | $OC_2H_5$ | weinrot |
| 10 | 4-$OC_2H_4OCH_3$ | 4-$CH_3$ | $C_3H_7$ | OH | rotviolett |
| 11 | 4-$SCH_3$ | 4-$OCH_3$ | $CH_2$-$C_6H_5$ | $OCH_2$-$C_6H_5$ | dunkelrot-blau |
| 12 | 4-$N(C_2H_5)_2$<br>2-$OC_2H_5$ | 4-$OC_2H_5$ | $CH_3$ | $OCH_3$ | blaugrün |
| 13 | 4-$(N(C_2H_5)_2$ | 4-Cl | $C_3H_7$ | $OC_3H_7$ | dunkelgrün |
| 14 | 4-N-$C_2H_5$<br>$CH_2$-$C_6H_5$ | 2-Cl | $C_6H_{13}$ | $OC_6H_{13}$ | blaugrün |
| 15 | H | 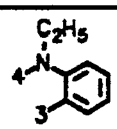 | $CH_3$ | OH | stumpf blaugrün |
| 16 | 4-$N(C_4H_9)_2$ | 4-$N(C_4H_9)_2$ | $CH_3$ | $OC_4H_9$ | kräftiges Blau |
| 17 | 4-$C_5H_{11}$ | 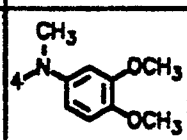 | $CH_3$ | OH/$OCH_3$ | sehr dunkel-grün |
| 18 | 4-Cl<br>2-Cl | 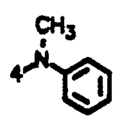 | $C_{12}H_{25}$ | $OCH_3$ | grasgrün |

| Beisp. | a | b | Q | X | Farbton auf Säureton |
|---|---|---|---|---|---|
| 19 | 4-$OC_4H_9$ | 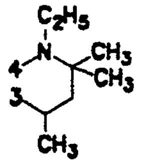 | $C_4H_9$ | OH | grün |
| 20 | 4-N-$CH_3$<br>3-$CH_3$<br>5-$CH_3$ | 4-$N(CH_2-C_6H_5)_2$ | $CH_3$ | $OH/OC_2H_5$ | blau |
| 21 | 4-$C_{12}H_{25}$ | 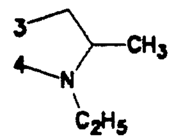 | $C_{12}H_{25}$ | $OCH_3$ | stumpfes Grün |
| 22 | 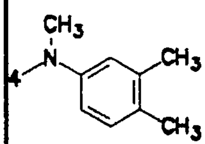 | 4-N-$C_6H_5$<br>\|<br>$CH_2-C_6H_5$ | $CH_2-C_6H_5$ | $OCH_3$ | blau |

Beispiel 23

20,2 g (0,05 mol) 9-Ethyl-3,6-di-benzoyl-carbazol und 18,7 g (0,13 mol) Phosphorpentoxid, 98,5 %ig werden in 70,5 g (0,48 mol) Phosphoroxychlorid suspendiert und bei Raumtemperatur langsam mit 12,1 g (0,1 mol) N,N-Dimethylamino-benzol versetzt. Es wird 12 h bei 40 °C verrührt. Die Schmelze wird auf 400 ml Eiswasser ausgetragen, mit 50%iger Natronlauge auf pH 2 eingestellt und ca. 10 h bei Raumtemperatur gerührt, bis der Farbstoff sich kristallin abscheidet. Absaugen, Waschen mit Wasser und Trocknen im Vakuum bei 40 °C liefert 32,2 g (97,8 % der Theorie) metallisch-glänzende Kristalle vom Schmp.: 215-220 °C.

32,6 g (0,05 mol) dieses Farbstoffes werden in 100 ml Dimethylformamid gelöst und bei Raumtemperatur langsam mit 12 g (0.15 mol) 50%iger Natronlauge versetzt. Nach 1 h Rühren bei 30 °C wird die bräunliche Lösung auf 1 l Eiswasser ausgetragen. Nach Zugabe von 50 g Natriumchlorid wird der farblose kristalline Niederschlag abgesaugt und bei 40 °C im Vakuum getrocknet. Ausbeute: 25,5 g (79 % d.Theorie) fast farbloses Kristallpulver vom Schmp. 78-80 °C und der Formel:

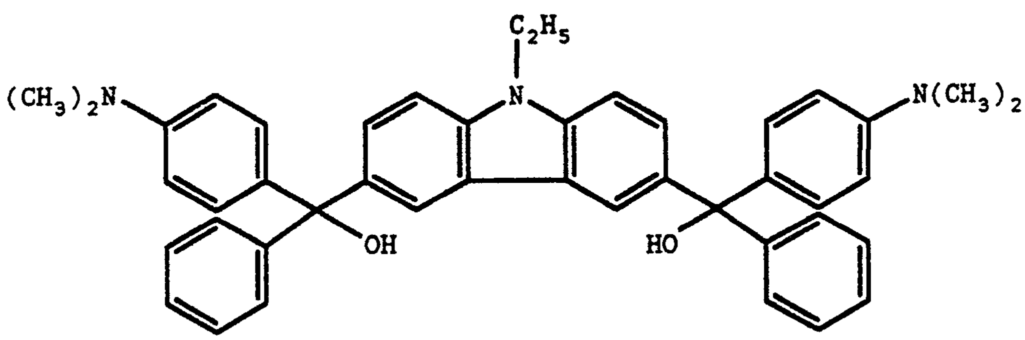

23

In Eisessig wird ein rotvioletter Farbton entwickelt mit $\lambda_{max}$ = 588 nm und $\lambda_{max}$ = 504 nm, die gleiohe Intensität besitzen.

Massenspektrum: $C_{44}H_{43}N_3O_2$ (645,8 ) m/e = 645 (16 %) $M^+$, m/e = 628 (14 %) $M^+$ -OH, m/e 525 (15 %) $M^+$ $-C_6H_4-N(CH_3)_2$

Auf Säureton oder Bisphenol A erhält man einen kräftigen sehr dunklen rotvioletten Farbton mit sehr guten CF- und CB-Stabilitäten sowie sehr gutem Migrationsverhalten.

Beispiel 24

24,1 g (0,05 mol) 9-Ethyl-3,6-di-(4-methoxybenzoyl)-carbazol und 19,8 g (0,1 mol) 9-Ethyl-carbazol werden in 70,5 g (0,48 mol) Phosphoroxychlorid suspendiert und bei Raumtemperatur mit 18,7 g (0.13 mol) Phosphorpentoxid versetzt. Die Reaktionsmischung wird 18 h bei 70° C verrührt und nach dem Abkühlen auf 10-15° C in 450 ml Methanol eingerührt, so daß die Temperatur 40° C nicht übersteigt. Man gibt 200 ml Toluol zu und tropft innerhalb von 1 h zur Farbstofflösung 200 g 30%ige Natriummethylatlösung. Die Mischung wird 2 h bei 40° C verrührt und dann auf 500 ml Wasser ausgetragen. Man trennt die organische Phase ab und entfernt das Lösungsmittel im Wasserstrahlvakuum. Zum Rückstand gibt man 200 ml Methanol zu und rührt kurz auf. Abfiltrieren und Trocknen im Vakuum bei 30° C liefert 33,6 g (76,2 % d.Theorie) beigefarbene Kristalle vom Schmp. 165-67° C und der Formel:

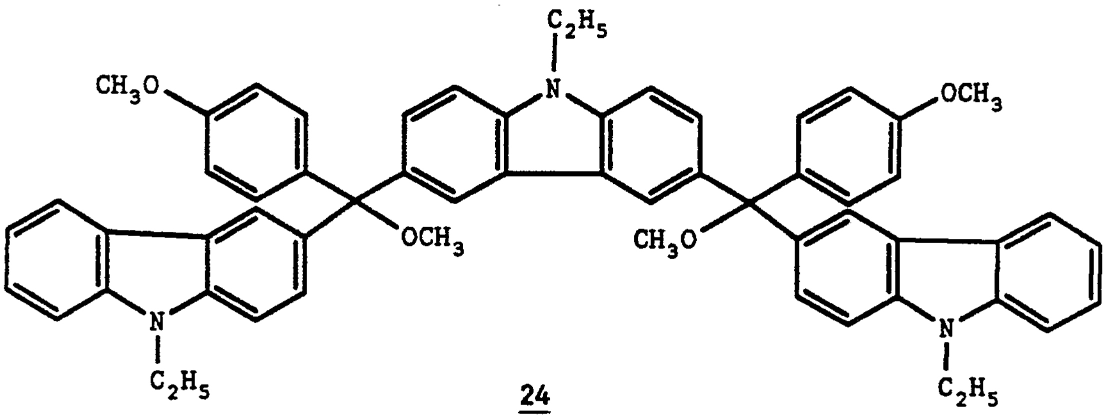

**24**

Eine Lösung in Eisessig wird sehr dunkelviolett mit $\lambda_{max}$ = 634 nm, $\lambda_2$ = 570 nm und $\lambda_3$ = 510 nm .
Auf Säureton oder Bisphenol A erhält man kräftige schwarzviolette Farbtöne.

Beispiel 25

Zur Suspension von 20,2 g (0,05 mol) 9-Ethyl-3,6-di-benzoyl-carbazol und 18,7 g (0,13 mol) Phosphorpentoxid, 98,5%ig, in 70,5 g (0,48 mol) Phosphoroxychlorid werden bei Raumtemperatur langsam 21,3 g (0,1 mol) 1-Ethyl-2,2,4-trimethyl-1,2,3,4-tetrahydrochinolinzugetropft. Die Reaktionsmischung wird auf 60° C erwärmt und 20 h bei dieser Temperatur verrührt. Die abgekühlte Schmelze wird auf 600 ml Eiswasser ausgetragen und rührt ca.10-15 h bei Raumtemperatur, bis der Farbstoff sich kristallin abscheidet. Der abgesaugte, noch feuchte Preßkuchen wird in 100 ml Dimethylformamid gelöst und bei Raumtemperatur langsam mit 20 g (0,15 mol) 30%iger Natronlauge versetzt. Nach 2 h Rühren bei 40° C wird die Reaktionsmischung auf 1 l Eiswasser ausgetragen. Nach Zugabe von 50 g Natriumchlorid wird der fast farblose kristalline Niederschlag abgesaugt. Trocknen im Vakuum bei 40° C liefert 34,5 g (85 % der Theorie ) hellgraue Kristalle vom Schmp. 126-130° C und der Formel:

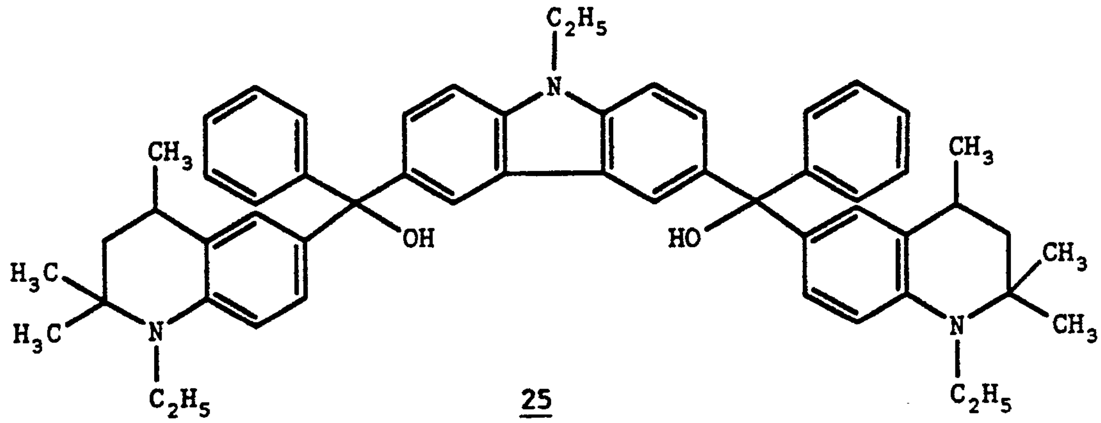

25

In Eisessig wird ein blauvioletter Farbton entwickelt mit $\lambda_{max}$ = 609 nm und $\lambda_2$ = 514 nm, die gleiche Intensität besitzen.

Auf Säureton oder Bisphenol A erhält man einen stumpfen dunkelblauvioletten Farbton mit hervorragenden CF- und CB-Stabilitäten sowie sehr gutem Migrationsverhalten.

Beispiel 26

20,8 g (0,05 mol) 9-Ethyl-3,6-di-benzoyl-carbazol und 18,7 g Phosphorpentoxid werden in 76,8 g (0,5 mol) Phosphoroxychlorid suspendiert und langsam mit 18,5 g (0,1 mol) N-Methyl-diphenyl-amin versetzt. Die Reaktionsmischung wird 12 h bei 50° C verrührt und nach dem Abkühlen auf 400 ml Methanol ausgetragen, so daß die Temperatur 50° C nicht übersteigt. Man gibt 150 ml Toluol zu und tropft innerhalb 1 h zur Farbstofflösung 40 g (0,3 mol) 30%ige Natronlauge-Lösung. Die Mischung wird 2 h bei 50° C verrührt und dann auf 600 ml Wasser ausgetragen. Man trennt die organische Phase ab und entfernt das Lösungsmittel im Wasserstrahlvakuum. Zum Rückstand gibt man 200 ml Methanol und rührt kurz auf. Abfiltrieren und Trocknen im Vakuum bei 30° C liefert 25,7 g hellbeiges Kristallpulver vom Schmp. 86-90° C und der Formel:

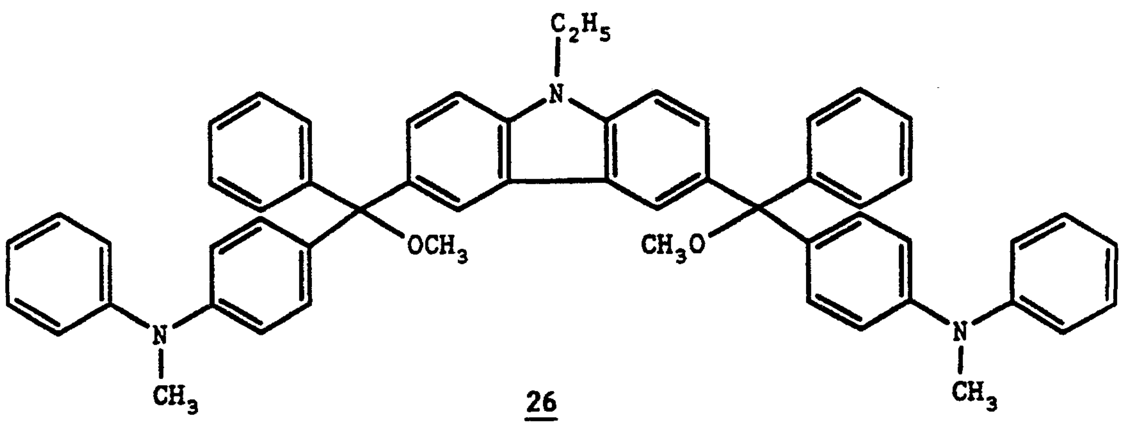

26

Eine Lösung in Eisessig wird petrol-blau mit $\lambda_{max}$ = 630 nm und $\lambda_2$ = 521 nm.

Auf Säureton wird ein stumpfer blaugrauer Farbton entwickelt.

In der in den Beispielen 23 bis 26 beschrieben Weise, erhält man auch die folgenden Farbbildner:

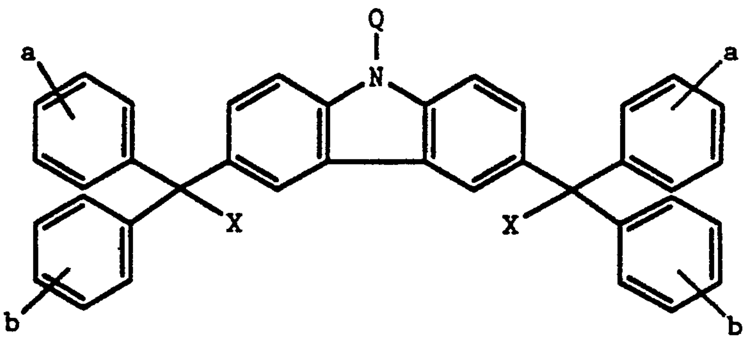

| Beisp. | a | b | Q | X | Farbton auf Säureton |
|---|---|---|---|---|---|
| 27 | 4-$OCH_3$ | 4-$OCH_3$ | $C_2H_5$ | OH | rötl. Schwarzgrau |
| 28 | 4-$OCH_3$<br>3-$OCH_3$ | 4-$OCH_3$ | $C_8H_{17}$ | OH | dunkles Schwarzviol. |
| 29 | 4-$SCH_3$<br>2-Cl | 4-$N(C_4H_9)_2$ | $CH_3$ | $OC_{12}H_{25}$ | braunschwarz |
| 30 | 4-$C_4H_9$-n | 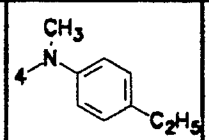 | $C_6H_{13}$-n | $OCH_3$ | stumpfes Blaugrün |
| 31 | 2-Cl | 4-$N(C_2H_5)_2$ | $C_2H_5$ | $OC_2H_5$ | blau |
| 32 | H | 4-$N(C_2H_5)_2$<br>2-$N(C_2H_5)_2$ | $CH_3$ | $OCH_3$/OH | dunkelgrün |
| 33 | 4-N-$C_2H_4Cl$<br>$C_2H_5$ | 4-N-$C_2H_4Cl$<br>$C_2H_5$ | $C_2H_5$ | OH | kräftiges Blau |
| 34 | 4-$OCH_2$-$C_6H_5$ | 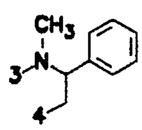 | $C_4H_9$ | OH | stumpfes Blauviolett |

Beispiel 35

40,6 g (0,13 mol) 9-Ethyl-3-benzoyl-carbazol und 24,1 g (0,17 mol) Phosphorpentoxid werden in 144 g (0,94 mol) Phosphoroxychlorid suspendiert. Bei Raumtemperatur werden langsam 24 g (0,13 mol) N-Methyl-diphenylamin zugetropft. Die Mischung wird 3 h bei 50 °C verrührt, und dann werden portionsweise 32 g (0,13 mol) 4,4'-Dimethoxy-benzophenon hinzugefügt. Die resultierende Schmelze wird weitere 5 h bei 50 °C verrührt, auf 800 ml Eiswasser ausgetragen und 300 ml Toluol hinzugefügt. Anschließend werden bei Raumtemperatur 66,7 g (0,5 mol) 30%ige Natronlauge langsam zugetropft. Es wird 10 h bei 70 °C verrührt und die sich oben abscheidende organische Phase abgetrennt. Aus der abgetrennten organischen Phase

werden im Wasserstrahlvkuum bei ca. 18-20 mbar und bis zu einer Temperatur von 70 °C azeotrop Toluol und Restwasser entfernt. Man erhält 85,2 g (90,4 % d. Theorie) ockerfarbenes Kristallpulver vom Schmp. 98-102 °C und der Formel:

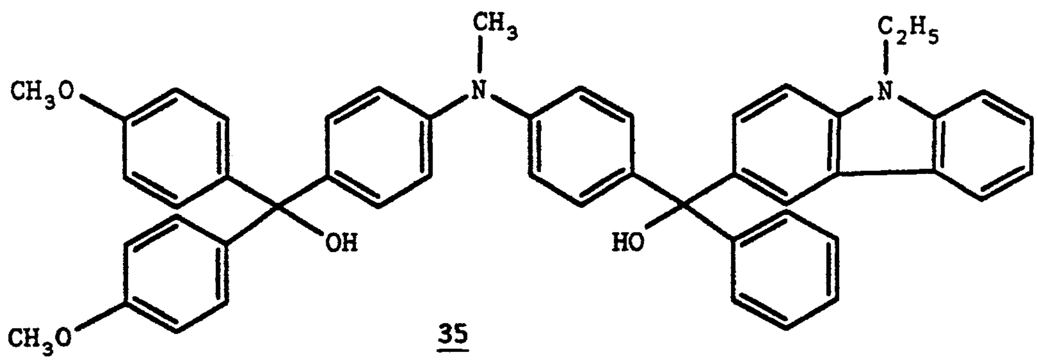

35

Auf Säureton und Salicylat erhält man kräftige schwarzgraue Farbtöne mit sehr guter CF- und guter CB-Stabilität.

Beispiel 36

5 g Farbbildner des Beispiels 1 werden in einem Gemisch aus 60 g Dodecylbenzol und 40 g Chlorparaffin mit 45 % Cl-Gehalt gelöst. 223 g einer solchen Lösung werden mit 39,5 g Oxadiazintrion von Desmodur H (NCO-Gehalt 20,5 %) vermischt. Anschließend erfolgt die Vermischung mit 320 g 0,5%iger Polyvinylalkohollösung und die Emulgierung im Schergefälle eines Rotor/Stator-Emulgiergeräts. Die Vernetzung erfolgt mit 76 g 9,0%iger Diethylentriaminlösung. Die Nachbehandlung erfolgt durch Erwärmen der Dispersion auf 60 °C und dreistündiges Rühren bei 60 °C. Es wird dabei eine 40 % Kapseln enthaltende Dispersion der Kapselgröße 7,3 µm erhalten.

250 ml dieser Dispersion wird vorgelegt und unter intensivem Rühren 40 g Cellulosefeinschliff (Arbocell BE 600/30 der Fa. Rettenmeier & Söhne) langsam eingestreut. Nach mindestens 30minütigem intensiven Rühren erfolgt die Zugabe von 40 ml 50%iger SBR-Latex (Baystal P 1600 der Fa. Bayer AG). Die resultierende 48,5%ige Streichfarbe wird mit Wasser auf 30 % Feststoffgehalt verdünnt und mit einer Luftbürste auf die Rückseite eines handelsüblichen Basis-Papiers gestrichen. Der Auftrag beträgt nach dem Trocknen 5 g/m$^2$.

Das so bestrichene Papier wird mit der beschichteten Seite auf die mit Entwicklersübstanz beschichtete Seite eines handelsüblichen kohlefreien Durchschreibepapiers gelegt. Bei Ausführung eines Schreibdruckes auf das mit Kapseln beschichtete Papier ergibt sich auf dem Durchschreibepapier eine rotviolette Durchschrift, die sehr lichtecht ist.

Beispiel 37

Verwendet man 5 g des Farbbildners des Beispiels 3 und arbeitet analog Beispiel 36, so erhält man ein mit Mikrokapseln beschichtetes Papier, das in analoger Weise einen kräftige, dunkelgrüne Durchschrift ergibt, die ebenfalls sehr lichtecht ist.

**Ansprüche**

1. Verbindungen der allgemeinen Formel

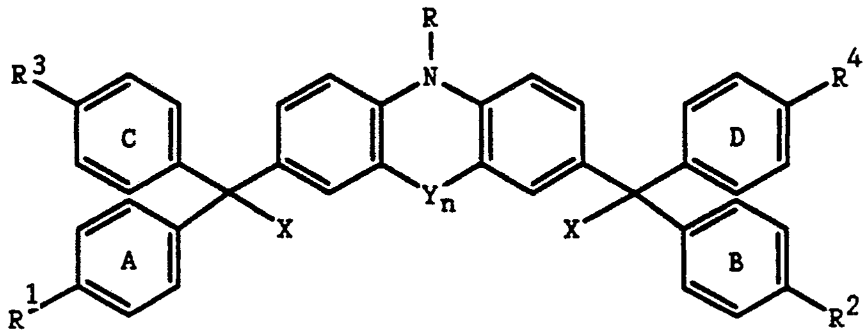

worin - unabhängig voneinander -

X

Hydroxy, Alkoxy, Alkenyloxy, Aralkoxy, Cycloalkoxy, Aryloxy, Acyloxy, Alkylamino, Dialkylamino, Acylamino, Aralkylamino oder Arylamino,

Y

eine direkte Bindung, Sauerstoff, Schwefel oder N-R ,

R

Alkyl, Alkenyl oder Aralkyl,

$R^1$ und $R^2$

Alkoxy, Aralkoxy, Aryloxy oder einen Rest der Formel

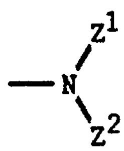

$R^3$ und $R^4$

Wasserstoff, Halogen, Alkyl, Alkoxy, Aralkyl, Aralkoxy, Aryloxy oder einen Rest der Formel

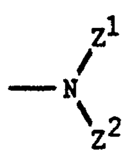

$Z^1$ und $Z^2$

Alkyl, Aryl, Cycloalkyl oder Aralkyl und

n

0 oder 1 bedeuten, wobei

den Ringen A, B, C und D weitere isocyclische oder heterocyclische Ringe anelliert werden können, und die cyclischen und acyclischen Reste sowie die Ringe A, B, C und D weitere in der Farbstoffchemie übliche, nichtionische Sübstituenten tragen können.

**2.** Verbindungen gemäß Anspruch 1 der Formel

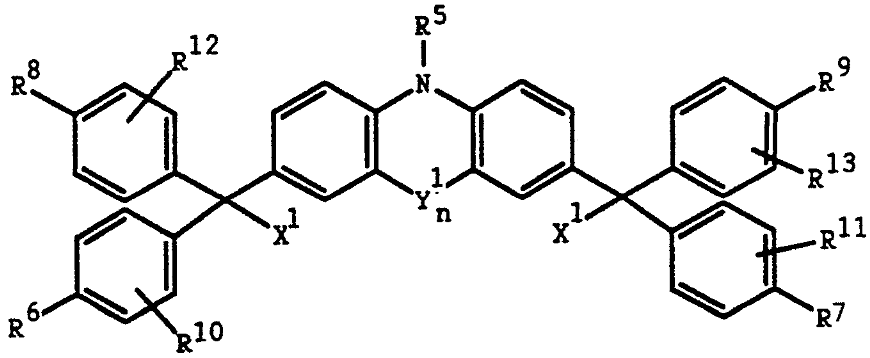

worin - unabhängig voneinander -

$X^1$

Hydroxy, gegebenenfalls durch $C_1$-$C_4$-Alkoxy oder Chlor substituiertes $C_1$-$C_{12}$-Alkoxy oder Benzyloxy,

$Y^1$

eine direkte Bindung, Sauerstoff oder N-$R^5$,

$R^5$

$C_1$-$C_{12}$-Alkyl oder Benzyl,

$R^6$ und $R^7$

gegebenenfalls durch Chlor, $C_1$-$C_4$-Alkoxy substituiertes $C_1$-$C_{12}$-Alkoxy, Benzyloxy, Phenoxy oder einen Rest der Formel

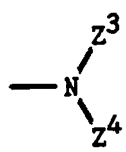

$R^8$ und $R^9$

Wasserstoff, Chlor, gegebenenfalls durch Chlor oder $C_1$-$C_4$-Alkoxy substituiertes $C_1$-$C_{12}$-Alkyl, gegebenenfalls durch Chlor oder $C_1$-$C_4$-Alkoxy substituiertes $C_1$-$C_{12}$-Alkoxy, Benzyl, Phenoxy oder einen Rest der Formel

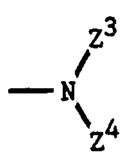

$R^{10}$, $R^{11}$, $R^{12}$ und $R^{13}$

Wasserstoff, Chlor, $C_1$-$C_{12}$-Alkyl, $C_1$-$C_{12}$-Alkoxy, Phenoxy, Benzyloxy oder einen Rest der Formel

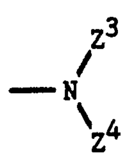

n

0 oder 1,

$Z^3$ und $Z^4$

gegebenfalls durch Chlor, Cyano, $C_1$-$C_4$-Alkoxycarbonyl oder $C_1$-$C_4$-Alkoxy sübstituiertes $C_1$-$C_{12}$-Alkyl,

Cyclohexyl, Phenyl oder Benzyl, die durch Chlor, $C_1$-$C_{12}$-Alkyl oder $C_1$-$C_{12}$-Alkoxy substituiert sein können, oder

$R^6$ mit $R^{10}$, $R^7$ mit $R^{11}$, $R^8$ mit $R^{12}$, $R^9$ mit $R^{13}$

unter Einschluß des sie tragenden Benzolringes ein Ringsystem der Formeln

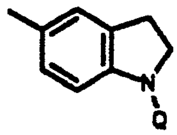 , 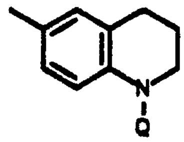 , 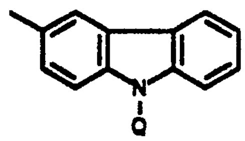

oder 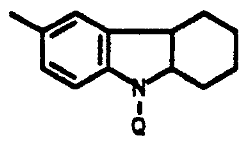 bilden können, wobei

Q

für $C_1$-$C_{12}$-Alkyl, das durch Chlor, Cyano, $C_1$-$C_4$-Alkoxycarbonyl oder $C_1$-$C_4$-Alkoxy substituiert sein kann, Cyclohexyl, Phenyl oder Benzyl, die durch Chlor, $C_1$-$C_{12}$-Alkyl oder $C_1$-$C_{12}$-Alkoxy substituiert sein können, steht, und der gesättigte Ringteil bis zu vier Reste aus der Gruppe Chlor, $C_1$-$C_4$-Alkyl, $C_1$-$C_4$-Alkoxy oder Phenyl tragen kann, oder

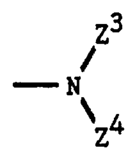

einen gegebenfalls durch Chlor, $C_1$-$C_4$-Alkyl oder Phenyl substituierten Pyrrolo-, Pyrrolidino-, Piperidino-, Pipecolino-, Morpholino-, Pyrazolo- oder Pyrazolinrest bedeutet.

3. Verbindungen gemäß Anspruch 1 der Formel

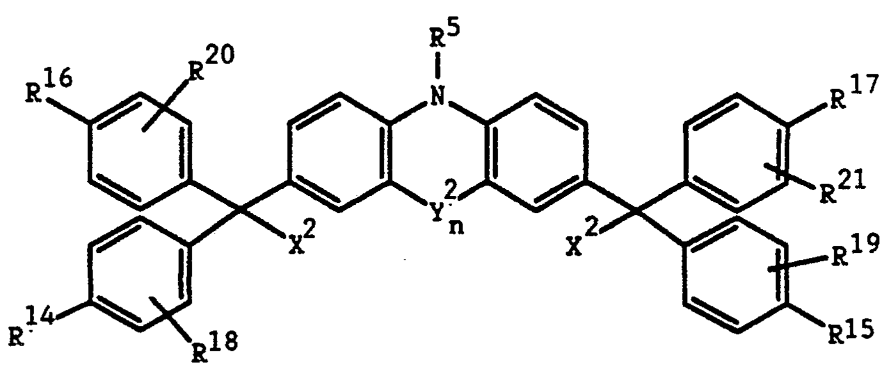

worin - unabhängig voneinander -

$X^2$

Hydroxy oder $C_1$-$C_{12}$-Alkoxy,

$Y^2$

eine direkte Bindung,

$R^{14}$ und $R^{15}$

$C_1$-$C_{12}$-Alkoxy, Benzyloxy oder einen Rest der Formel

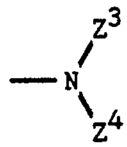

$R^{16}$ und $R^{17}$
Wasserstoff, Chlor, $C_1$-$C_{12}$-Alkyl, $C_1$-$C_{12}$-Alkoxy. Benzyloxy oder einen Rest der Formel

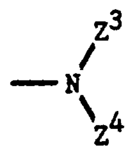

$R^{18}$, $R^{19}$, $R^{20}$ und $R^{21}$
Wasserstoff, Chlor, $C_1$-$C_{12}$-Alkyl, $C_1$-$C_{12}$-Alkoxy, $C_1$-$C_4$-Alkylamino oder Di-$C_1$-$C_4$-Alkylamino oder
$R^{14}$ und $R^{15}$
gemeinsam mit dem Benzolring, an dem sie gebunden sind, ein Ringsystems der Formeln

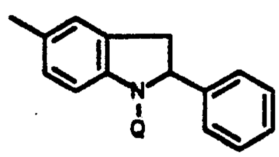 , 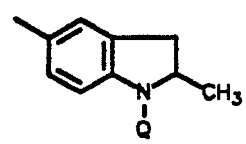 ,

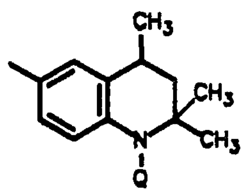 oder 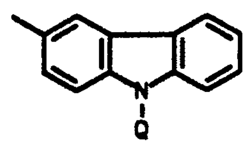 bilden

können, wobei
$R^5$, Q, $Z^3$, $Z^4$ und n
die in Anspruch 2 angegebene Bedeutung haben.

**4.** Verbindungen gemäß Anspruch 1, dadurch gekennzeichnet, daß sie symmetrisch sind.

**5.** Verbindung der Formel

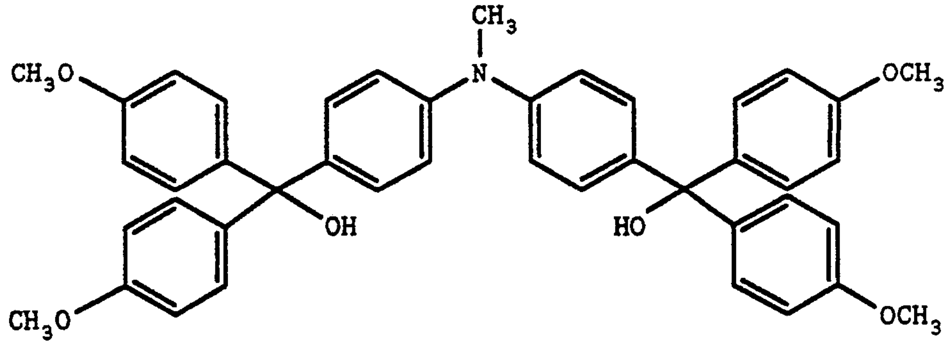

6. Verfahren zur Herstellung von Verbindungen des Anspruchs 1, dadurch gekennzeichnet, daß Farbstoffsalze der Formel

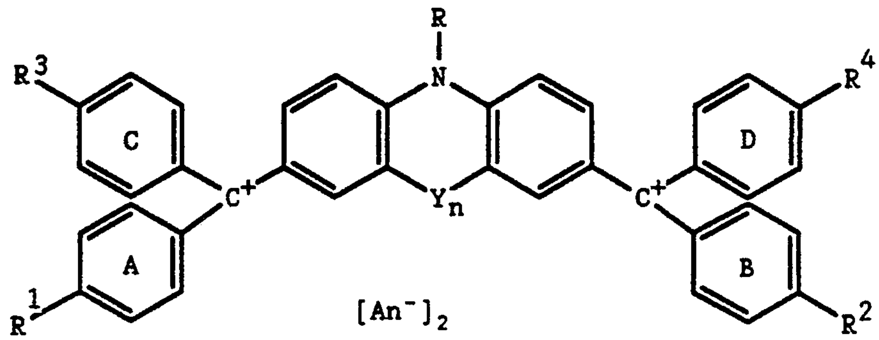

mit den Basen der Formel MeX,
worin
R, $R^1$-$R^4$, X, Y, n und die Ringe A, B, C, und D die in Anspruch 1 genannte Bedeutung haben, und
Me
ein Alkali- oder Erdalkalimetall, insbesondere Natrium oder Kalium und
$An^-$
ein Anion aus der Reihe Chlorid, Bromid, Acetat, Sulfat, Phosphat oder p-Toluolsulfonat bedeuten,
in einem für die Reaktion geeigneten, organischen Lösungsmittel umsetzt.

7. Verfahren zur Herstellung von Verbindungen gemäß Anspruch 1,. dadurch gekennzeichnet, daß man in einer Eintopfreaktion insgesamt 2 mol der Ketone der Formel

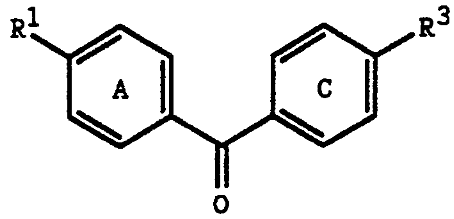

und

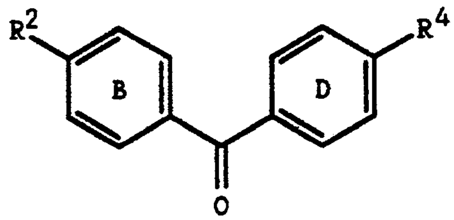

mit 1 mol Amin der Formel

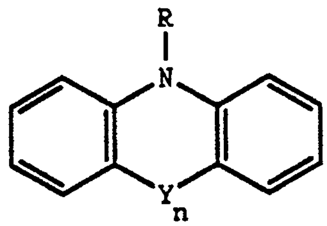

oder 1 mol Diketon der Formel

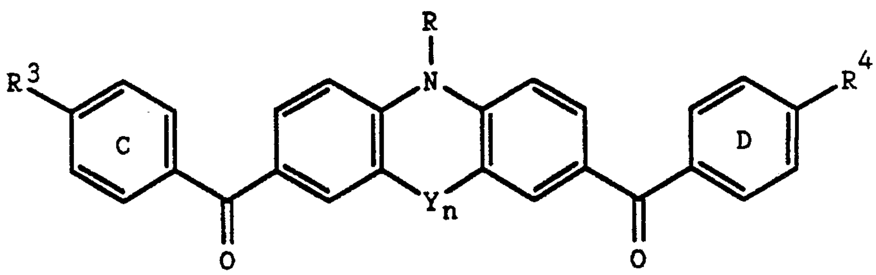

mit insgesamt 2 mol Amin der Formeln

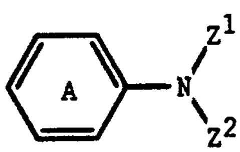

und

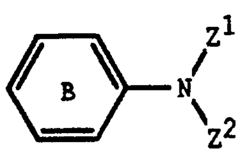

in Gegenwart eines Kondensationsmittels, das ein Anion $An^-$ liefert, zu den Farbsalzen der Formel

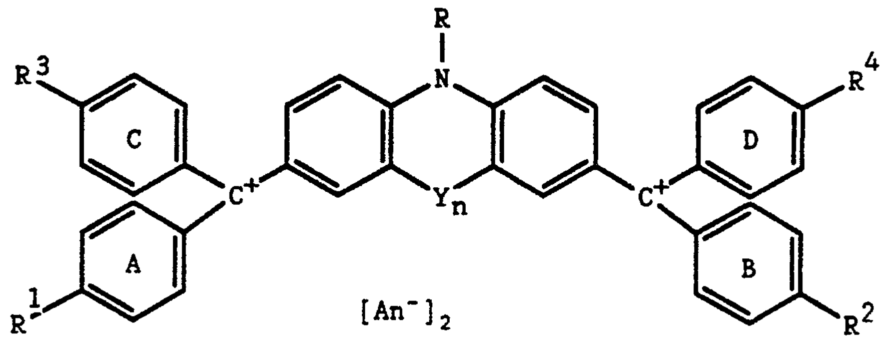

kondensiert und diese ohne Zwischenisolierung mit den Basen der Formel MeX, worin
R, $R^1$-$R^4$, X, Y, n und die Ringe A, B, C und D die in Anspruch 1 angegebene Bedeutung haben,

$Me^+$
ein Alkali- oder Erdalkalimetall, insbesondere Natrium oder Kalium und

$An^-$
ein Anion aus der Reihe Chlorid, Bromid, Acetat, Sulfat, Phosphat oder p-Toluolsulfonat bedeuten,

umsetzt.

8. Verwendung der Verbindungen gemäß Anspruch 1 als Farbbildner in druck-, wärme- und elektrosensitivem Aufzeichnungsmaterial.

9. Druck-, wärme- und elektrosensitives Aufzeichnungsmaterial, dadurch gekennzeichnet, daß es in seinem Reaktantensystemmindestens einen Farbbildner gemäß Anspruch 1 enthält.

Aufzeichnungsmaterial gemäß Anspruch 9, dadurch gekennzeichnet, daß es außerdem einen anderen üblichen Farbbildner oder Mischungen von Farbbildnern, wie sie bei den Verfahren gemäß Ansprüchen 6 und 7 erhalten werden, enthält.

Europäisches Patentamt

# EUROPÄISCHER RECHERCHENBERICHT

Nummer der Anmeldung

**EP 90 12 2432**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 401 958 (BASF)<br>* Anspruch 1 *<br>- - - - - | 1 | C 09<br>B 11/16 |

| RECHERCHIERTE SACHGEBIETE (Int. Cl.5) |
|---|
| C 09 B |

Der vorliegende Recherchenbericht wurde für alle Patentansprüche erstellt

| Recherchenort | Abschlußdatum der Recherche | Prüfer |
|---|---|---|
| Den Haag | 16 Januar 91 | GINESTET M.E.J. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument